# EUROPÄISCHE PATENTSCHRIFT

(11) **EP 0 262 335 B1**
(45) Veröffentlichungstag und Bekanntmachung des Hinweises auf die Patenterteilung: **29.09.1993**
(21) Anmeldenummer: 87111138.1
(22) Anmeldetag: 01.08.1987
(51) Int. Cl.: G01F 1/78

(54) **Verfahren und Vorrichtung zur kontinuierlichen Messung der Förderstärke eines Schüttgutstromes**
Method and device for continuously measuring the extraction flow rate of bulk goods
Procédé et dispositif pour la mesure continue du débit d'extraction d'un courant de matériel en vrac

(30) Priorität: 03.10.1986 DE 3633694
(43) Veröffentlichungstag der Anmeldung: 06.04.1988
(73) Patentinhaber: CARL SCHENCK AG, D-64273 Darmstadt (DE)
(72) Erfinder: Jost, Gerhard, Dr., D-6109 Mühltal (DE)
(74) Vertreter: Brandt, Ernst-Ulrich, Dipl.-Phys., Dipl.-Ing.

(56) Entgegenhaltungen:
- EP-A- 0 146 902
- DE-A- 1 473 155
- DE-A- 2 544 976
- DE-A- 3 327 594
- US-A- 2 819 437

## Beschreibung

Die Erfindung betrifft ein Verfahren zur kontinuierlichen Messung der Förderstärke eines Schüttgutstromes sowie eine Vorrichtung zur Durchführung des Verfahrens.

Bei der kontinuierlichen Messung der Förderstärke eines Schüttgutstromes ist es bekannt (DE-OS 25 44 976), die Trägheitskraft (Corioliskraft), welche bei der Mitnahme der Masseteilchen durch einen sich drehenden Bezugskörper, im allgemeinen ein Schleuderrad, auftritt, zur Massenbestimmung auszunutzen. Hierzu wird der Materialstrom achsparallel auf das mit Leitschaufeln versehene Schleuderrad aufgebracht. Das Schüttgut wird im wesentlichen senkrecht zur Rotationsachse des Schleuderrades weggeschleudert. Das Drehmoment des mit konstanter Drehzahl rotierenden Schleuderrades ändert sich entsprechend der Corioliskraft, wobei die Drehmomentänderung zu der Masse des strömenden Schüttgutes etwa proportional ist. Mit der Änderung des Drehmoments ändert sich die Leistungsaufnahme des antreibenden Elektromotors. Die Stromaufnahme des Motors kann daher gemessen und als Maß zur Bestimmung des Massenstromes benutzt werden. Die beschriebene Anordnung ist lediglich für einfache Anwendungen ohne hohe Genauigkeitsanforderungen geeignet.

Bei einem bekannten Verfahren zur Massenstrommessung (DE-OS 33 27 594) wird zum Antrieb des Schleuderrades ein feststehender Drehstrom-Asynchronmotor verwendet. Die Wirkleistungsaufnahme des Motors wird gemessen und aus der gemessenen Wirkleistung wird der Massenstrom ermittelt. Die Genauigkeit eines solchen Verfahrens ist, bedingt durch die Wirkleistungsmessung und andere Faktoren, nicht befriedigend. Die Motorverluste, Motorcharakteristik usw. bewirken von Störeinflüssen (Temperatur, Netzfrequenz) abhängige Meßfehler.

Bei einer Meßvorrichtung zur kontinuierlichen Gewichtserfassung von Materialströmen (DE-OS 33 46 145) wird zum Antrieb eines Flügelrades (Meßrad) ein pendelnd gelagerter, mit konstanter Drehzahl laufender Motor verwendet, wobei das Antriebsdrehmoment als Meßgröße zur Ermittlung der Förderstärke dient. Die genaue Erfassung der Förderstärke erfordert, daß die Drehzahl des Meßrades konstant gehalten wird. Dies wird in der Meßvorrichtung dadurch erreicht, daß zum Antrieb des Rades ein Synchron-Motor verwendet wird.

Grundsätzlich bringt die Konstanthaltung der Drehzahl einige Nachteile mit sich. Wird ein Asynchron-Motor zum Antrieb benutzt, so ist eine Drehzahlregelung zum Ausgleich der lastabhängigen Schlupfänderungen erforderlich. Wird ein Synchron-Motor eingesetzt, so ändert sich die Drehzahl mit der Netzfrequenz. Netzfrequenzänderungen sind in Verbundnetzen von untergeordneter Bedeutung. Es gibt jedoch viele Netze, bei denen davon ausgegangen werden muß, daß sich die Netzfrequenz zumindest kurzfristig beträchtlich ändert.

Aus der US 2,819,437 ist eine Meßschaltung für Massendurchflußmeßgeräte nach dem Coriolis-Prinzip bekannt, bei der zur Ermittlung der Förderstärke sowohl das Drehmoment des Antriebsmotors als auch dessen Winkelgeschwindigkeit berücksichtigt wird.

Aus der DE-OS 14 73 155 ist ein Strömungsmeßgerät für die Strömungsmenge durch eine Turbine bekannt, bei der die Strömungsmenge durch den Quotienten von Drehmoment und Drehzahl der Turbine bestimmbar ist.

Allerdings entsteht bei allen Drehzahländerungen auch eine Massenbeschleunigungswirkung durch die Masse der angetriebenen Meßanordnung, die sich auf das Ergebnis der Förderstärke störend auswirkt.

Es ist Aufgabe der vorliegenden Erfindung, mit einfachen Mitteln die Störgrößen auszuchalten, so daß eine möglichst hohe Meßgenauigkeit erzielt wird.

Dies wird durch die in den Patentansprüchen angegebenen Maßnahmen erreicht. Die Ansprüche betreffen auch Ausgestaltungen der Erfindung sowie eine Vorrichtung zur Durchführung des Verfahrens.

Durch die Messung des Abtriebsmoments und der Lastdrehzahl des Antriebsmotors bzw. des Meßrades ergibt sich ein Meßverfahren, das mit verhältnismäßig einfachen Mitteln zu verwirklichen ist und das trotzdem eine besonders hohe Meßgenauigkeit gewährleistet.

Grundgedanke der vorliegenden Erfindung ist es, bei Verwendung eines beliebigen Motors zum Antrieb des Meßrades die Drehzahl mit Hilfe eines Drehzahlaufnehmers zu messen und in einer beispielsweise mikroprozessorgesteuerten Auswerteeinrichtung so zu berücksichtigen, daß die Genauigkeit der Förderstärkenmessung nicht beeinträchtigt wird. Hierbei wird für jeden Förderstärkenmeßwert die tatsächliche augenblickliche Drehzahl verwendet.

Bei Berücksichtigung der Winkelbeschleunigung und des Massenträgheitsmoments der rotierenden Teile der Anordnung (Motor, Meßrad) wird die hohe Meßgenauigkeit des erfindungsgemäßen Verfahrens auch bei sich ändernder Drehzahl, d. h. bei instationären Drehzahlverhältnissen, beibehalten.

Ein weiterer Vorteil der Erfindung liegt darin, daß z. B. ein Standard-Asynchronmotor ohne Drehzahlregelung zum Antrieb eingesetzt werden kann, der im Vergleich zu einem Reluctanz- bzw. drehzahlgeregelten Asynchron-Motor eine beträchtlich niedrigere Verlustleistung hat. Daraus resultieren niedrigere Temperaturen im Gerät, insbesondere werden die Oberflächentemperaturen geringer. Dies bringt erhebliche Vorteile, wenn das Gerät staubexplosionsgeschützt ausgebaut werden muß. Das Verfahren und die Vorrichtung nach der Erfindung sind jedoch auch bei Verwendung von Synchronmotoren einsetzbar, insbesondere wenn die Drehzahl, beispielsweise durch ein schlechtes Netz bedingt, nicht genügend genau konstant gehalten werden kann.

Die Meßeinrichtung ist für sehr hohe Genauigkeiten geeignet. Ein weiterer Vorteil besteht darin, daß die Meßgenauigkeit durch Frequenzänderungen und Spannungsschwankungen nicht mehr beeinträchtigt wird.

Eine Ausführungsform der Erfindung wird dadurch realisiert, daß zum Antrieb des Meßrades ein Asynchron-Motor eingesetzt wird. Zur Drehmomentmessung kann der Motor in bekannter Weise pendelnd gelagert und über einen Hebelarm auf eine Drehmomentmeßeinrichtung abgestützt werden. Die Drehmomentmeßeinrichtung zeigt das vom Motor abgegebene Drehmoment an.

Die Asynchronmaschine kann jedoch auch fest aufgestellt werden. In diesem Fall wird an der Welle der Maschine ein geeigneter Drehmomentaufnehmer angeordnet, über den das Drehmoment erfaßt wird.

Zur Drehzahlmessung wird beispielsweise das Meßrad mit Markierungen versehen, die mit einem induktiven Nährungssensor abgetastet werden. Die Drehzahl kann hierbei z. B. in einen 0,1-Sekunden-Zyklus gemessen werden.

Die Drehmoment- und Drehzahlsignale können, ggf. zusammen mit weiteren Parametern, zur Ermittlung der Förderstärke in einer mikroprozessorgesteuerten Auswerteeinrichtung verarbeitet werden. Sowohl das Motordrehmoment als auch die Lastdrehzahl der Anordnung können fortlaufend gemessen und verarbeitet werden.

Bei der Ermittlung der Förderstärke wird ein Signal oder ein Wert für das Abtriebsmoment des Antriebsmotors mit dem Kehrwert eines Signals oder eines Wertes für die Lastdrehzahl multipliziert. Diese Operation kann auch mit bekannten analogen oder digitalen Mitteln verwirklicht werden.

Zur Erhöhung der Genauigkeit der Meßanordung bei Drehzahländerungen kann in der Auswerteeinrichtung auch die Winkelbeschleunigung ermittelt und zusammen mit dem Massenträgheitsmoment der rotierenden Teile zu einem Korrekturwert verarbeitet werden, der bei der Ermittlung der Förderstärke berücksichtigt wird. Das Massenträgheitsmoment der rotierenden Teile der Vorrichtung ergibt bei Drehzahländerungen, d. h. bei Winkelbeschleunigung, ein Fehlmoment, das bei steigender Drehzahl vom gemessenen Antriebsmoment abgezogen und bei fallender Drehzahl dem gemessenen Antriebsmoment zugezählt werden muß.

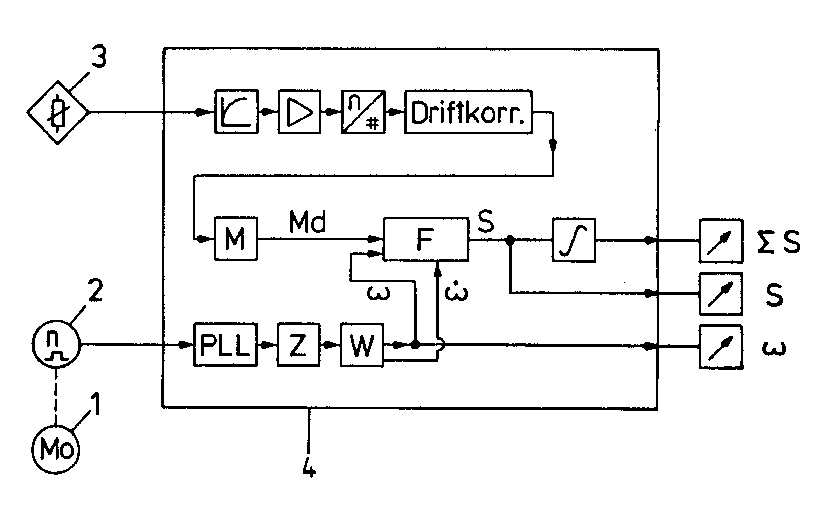

In der Zeichnung ist schematisch eine Schaltungsanordnung zur Durchführung des erfindungsgemäßen Verfahrens dargestellt, die die wesentlichen Bauteile der Vorrichtung nach der Erfindung umfaßt.

Am Antriebsmotor 1 für das nicht dargestellte Meßrad ist ein Drehzahlgeber 2 angeordnet. Das Abtriebsmoment des Motors wird durch einen Geber 3 erfaßt. Der Geber ist in bekannter Weise als Kraftgeber ausgebildet. Anstelle eines Kraftgebers kann, z. B. bei einem fest aufgestellten Antriebsmotor, auch ein Drehmomentgeber verwendet werden.

Das Ausgangssignal des Kraftgebers 3 wird über Filter, Verstärker, A/D-Wandler und ein Korrekturglied über ein Glied M zur Berechnung des Abtriebsmomentes geführt. Das Abtriebsmoment Md des Antriebsmotors wird hierbei in bekannter Weise aus dem Ausgangssignal des Kraftgebers 3 und einem Hebelarm des pendelnd gelagerten Antriebsmotors errechnet.

Das vom Drehzahlgeber 2 kommende Meßsignal n wird über einen PLL-Kreis (Phase locked loop) und nachgeschalteten Zähler Z digitalisiert und über ein Glied W zur Berechnung der Winkelgeschwindigkeit w und der Winkelbeschleunigung ẇ geführt. Aus dem Abtriebsmoment Md und der Drehzahl bzw. Winkelgeschwindigkeit w (bzw. dem Kehrwert 1/w) und der Winkelbeschleunigung ẇ wird in einem weiteren Glied F die augenblickliche Förderstärke S, z. B. in Kilogramm/h gebildet. Hierbei wird ggf. der im Glied F gespeicherte Wert für das Massenträgheitsmoment der rotierenden Teile der Anordnung berücksichtigt. Über ein Integrationsglied kann die gesamte jeweils durchgesetzte Schüttgutmenge ΣS ermittelt werden. Die Gesamtmenge ΣS, die augenblickliche Förderstärke S sowie ggf. die Drehzahl können, wie in der Zeichnung angedeutet, auch angezeigt werden.

Die beschriebene Anordnung kann als mikroprozessorgesteuerte Auswerteeinrichtung 4 ausgebildet sein.

Das Ausgangssignal für die Förderstärke S kann auch zur Steuerung oder Regelung des Antriebsmotors 1 verwendet werden, wenn die Erfindung bei Zuteileinrichtungen oder Dosiereinrichtungen eingesetzt wird.

## Patentansprüche

1. Verfahren zur kontinuierlichen Messung der Förderstärke eines Schüttgutstromes, bei dem das Schüttgut auf ein von einem Motor angetriebenes Meßrad aufgegeben und das Abtriebsmoment (Md) des Antriebsmotors (1) und dessen Lastdrehzahl (n) bzw. Winkelgeschwindigkeit (w) oder die Drehzahl (n) bzw. Winkelgeschwindigkeit (w) des Meßrades gemessen wird, und das gemessene Abtriebsmoment (Md) und die gemessene Lastdrehzahl (n) bzw. Drehzahl zur Ermittlung der Förderstärke verwendet werden, wobei jeweils ein Signal oder ein Wert für das Abtriebsmoment mit dem Kehrwert eines Signals oder eines Wertes für die Lastdrehzahl des Antriebsmotors bzw. die Drehzahl des Meßrades bzw. die Winkelgeschwindigkeit des Antriebsmotors bzw. des Meßrades multipliziert wird, und wobei bei Veränderung der Lastdrehzahl (n) bzw. der Winkelgeschwindigkeit (w) die Winkelbeschleunigung (ẇ) ermittelt wird, und aus der Winkelbeschleunigung (ẇ) und dem Massenträgheitsmoment der rotierenden Teile der Anordnung ein Korrekturwert bildbar ist, der bei der Ermittlung der Förderstärke (S) berücksichtigt wird.

2. Verfahren nach Anspruch 1, dadurch gekennzeichnet, daß das Abtriebsmoment (Md) und die Lastdrehzahl (n) fortlaufend gemessen und fortlaufend für die Ermittlung der Förderstärke (S) verwendet werden.

3. Verfahren nach Anspruch 1, dadurch gekennzeichnet, daß die Lastdrehzahl (n) in hinreichend kurzen Zeitabständen gemessen wird.

4. Vorrichtung zur Durchführung des Verfahrens nach Anspruch 1 mit einem Meßrad, einem Antriebsmotor (1) für das Meßrad, einer Meßeinrichtung zur Messung des Abtriebsmomentes (Md) des Antriebsmotors (1) sowie einer Drehzahlmeßeinrichtung (2) am Antriebsmotor (1) oder am Meßrad zur Erfassung der Lastdrehzahl (n) des Antriebsmotors bzw. der Drehzahl des Meßrads, und mit einer vorzugsweise mikroprozessorgesteuerten Auswerteeinrichtung (4), die jeweils ein Signal oder einen Wert für das Abtriebsmoment mit dem Kehrwert eines Signals oder eines Wertes für die Lastdrehzahl des Antriebsmotors bzw. die Drehzahl des Meßrads bzw. die Winkelgeschwindigkeit des Antriebsmotors bzw. des Meßrads multipliziert, um die Förderstärke zu ermitteln, und die aus der Drehzahländerung oder Winkelbeschleunigung (ẇ) und dem Massenträgheitsmoment der rotierenden Teile der Anordnung einen Korrekturwert bildet und bei der Ermittlung der Förderstärke (S) berücksichtigt.

5. Vorrichtung nach Anspruch 4, dadurch gekennzeichnet, daß der Antriebsmotor (1) zur Erfassung des Abtriebsmoments (Md) pendelnd gelagert und auf eine geeignete Drehmoment-Meßeinrichtung abgestützt ist.

6. Vorrichtung nach einem der Ansprüche 4 und 5, dadurch gekennzeichnet, daß als Antriebsmotor (1) ein Asynchronmotor verwendet wird.

## Claims

1. A method of continuously measuring the rate of conveyance of a flow of bulk material, wherein the bulk material is fed to a measuring wheel driven by a motor and the output torque (Md) of the drive motor (1) and the on-load rotation speed (n) or angular velocity (w) of said drive motor (1) or the rotation speed (n) or angular velocity (w) of the measuring wheel is measured, and the measured output torque (Md) and the measured on-load rotation speed (n) or rotation speed are used to determine the rate of conveyance, wherein a respective signal or a value for the output torque is multiplied by the reciprocal value of a signal or a value for the on-load rotation speed of the drive motor or the rotation speed of the measuring wheel or the angular velocity of the drive motor or of the measuring wheel and wherein in the event of a change in the on-load rotation speed (n) or angular velocity (w), the angular acceleration (ẇ) is determined, and from the angular acceleration (ẇ) and the mass moment of inertia of the rotating parts of the arrangement it is possible to form a correction value which is taken into consideration in the determination of the rate of conveyance (S).

2. A method as claimed in Claim 1, characterised in that the output torque (Md) and the on-load rotation speed (n) are continuously measured and are continuously used to determine the rate of conveyance (S).

3. A method as claimed in Claim 1, characterised in that the on-load rotation speed (n) is measured at sufficiently short intervals of time.

4. A device for implementing the method claimed in Claim 1 comprising a measuring wheel, a drive motor (1) for the measuring wheel, a measuring device for measuring the output torque (Md) of the drive motor (1), and a rotation speed measuring device (2) attached to the drive motor (1) or to the measuring wheel for detecting the on-load rotation speed (n) of the drive motor or the rotation speed of the measuring wheel respectively and comprising an analysis device (4) which is preferably controlled by a microprocessor and which multiplies a respective signal or a value for the output torque by the reciprocal value of a signal or a value for the on-load rotation speed of the drive motor or the rotation speed of the measuring wheel or the angular velocity of the drive motor or of the measuring wheel in order to determine the rate of conveyance, and which forms a correction value from the change in rotation speed or from the angular acceleration (ẇ) and the mass moment of inertia of the rotating parts of the arrangement and takes said correction value into consideration in the determination of the rate of conveyance (S).

5. A device as claimed in Claim 4, characterised in that for the detection of the output torque (Md) the drive motor (1) is arranged to swing in a bearing and is supported on a suitable torque measuring device.

6. A device as claimed in one of Claims 4 and 5, characterised in that an asynchronous motor is used as drive motor (1).

## Revendications

1. Procédé pour la mesure continue du débit d'extraction d'un flux de matériau en vrac, dans lequel le matériau en vrac est chargé sur une roue de mesure, entraînée par un moteur, et le moment de sortie (Md) du moteur d'entraînement (1) et sa vitesse de rotation (n) en charge ou sa vitesse angulaire (w) ou la vitesse de rotation (n) ou la vitesse angulaire (w) de la roue de mesure est mesuré, et le moment de sortie (Md) mesuré et la vitesse de rotation en charge (n) ou la vitesse de rotation mesurée sont utilisés pour déterminer le débit d'extraction, un signal ou une valeur du moment de sortie étant multiplié par la valeur inverse d'un signal ou d'une valeur de la vitesse de rotation en charge du moteur d'entraînement ou la vitesse de rotation de la roue de mesure ou la vitesse angulaire du moteur d'entraînement ou de la roue de mesure, et dans lequel , en cas de variation de la vitesse de rotation en charge (n) ou de la vitesse angulaire (w), l'accélération angulaire (ẇ), et à partir de l'accélération angulaire (ẇ) et du moment d'inertie des masses des parties rotatives du dispositif, il est possible de former une valeur de correction qui est prise en compte lors de la détermination du débit d'extraction (S).

2. Procédé selon la revendication 1, caractérisé en ce que le moment de sortie (Md) et la vitesse de rotation en charge (n) sont mesurés en continu et sont utilisés en continu pour déterminer le débit (S).

3. Procédé selon la revendication 1, caractérisé en ce que la vitesse de rotation en charge (n) est mesurée à des intervalles de temps suffisamment courts.

4. Procédé pour la mise en oeuvre du procédé selon la revendication 1 comportant une roue de mesure, un moteur d'entraînement (1) de la roue de mesure, un dispositif de mesure pour mesurer le moment de sortie (Md) du moteur d'entraînement (1) ainsi qu'un dispositif de mesure de la vitesse de rotation (2) sur le moteur d'entraînement (1) ou sur la roue de mesure, pour enregistrer la vitesse de rotation en charge (n) du moteur d'entraînement ou la vitesse de rotation de la roue de mesure et comportant un dispositif d'exploitation (4) de préférence commandé par microprocesseur, qui multiplie un signal ou une valeur du moment de sortie par la valeur inverse d'un signal ou d'une valeur de la vitesse de rotation en charge du moteur d'entraînement ou la vitesse de rotation de la roue de mesure ou la vitesse angulaire du moteur d'entraînement ou de la roue de mesure, afin de déterminer le débit, et qui forme, à partir de la variation de la vitesse de rotation ou de l'accélération angulaire (w) et à partir du moment d'inertie des masses des parties rotatives du dispositif, une valeur de correction et qui en tient compte pour la détermination du débit d'extraction (S).

5. Dispositif selon la revendication 4, caractérisé en ce que le moteur d'entraînement (1) est monté oscillant pour détecter le moment de sortie (Md) et prend appui sur un dispositif de mesure de couple de rotation approprié.

6. Dispositif selon l'une des revendications 4 et 5, caractérisé en ce qu'on utilise un moteur asynchrone comme moteur d'entraînement (1).
